# EUROPEAN PATENT APPLICATION

(11) **EP 3 100 777 A1**
(43) Date of publication of application: **07.12.2016**
(21) Application number: 15305843.3
(22) Date of filing: 01.06.2015
(51) Int. Cl.: B01D 3/38, C02F 1/20, B01D 5/00, C02F 101/16

(54) **METHOD FOR SEPARATING HYDROGEN SULFIDE AND AMMONIA DISSOLVED IN SOUR WATERS**

(71) Applicant: Prosernat, 92800 Puteaux (FR)
(72) Inventor: DALARY, Guillaume, 92042 Paris La Defense Cedex (FR); RAMESHNI, Mahin, Pasadena, CA 91101 (US)
(74) Representative: Cabinet Plasseraud

(57) **Abstract**

The invention relates to a method for treating sour waters containing hydrogen sulfide and ammonia in the dissolved state, for example from sour gas treatment facilities, treatment facilities for gases from Claus processes, refining processes, etc.

In a column (2) provided with internals for liquid/gas contacting, the sour water feedstock (1) is stripped using steam (3), then cooled by a cold liquid (9) and washed using cold water injection (10). This method allows to separate an ammonia-poor (5-5000 ppm) H₂S gaseous effluent (11) and an H₂S-lean (100-1000 ppm for example) purified water (12). The method is yet improved by adding a second column that receives the purified water from the first column and separates the hydrogen sulfide and the ammonia according to the method operated in the first column. The purified water from the second column is preferably partially injected into the first and/or the second column as wash water. The invention also relates to a facility for implementing the method according to the invention.

## Description

### FIELD OF THE INVENTION

The invention relates to a method and to a device for treating sour waters containing hydrogen sulfide and ammonia in order to separate said constituents.

### BACKGROUND OF THE INVENTION

Water strippers are used in the petroleum and gas industry to purify aqueous effluents (sour waters) potentially containing hydrogen sulfide and ammonia in the dissolved state, and possibly other gases such as CO₂, or vaporized liquid hydrocarbons.

These gases are separated in order to be treated in Claus conversion units and/or incinerated according to the current emission standards.

A water stripper is a stripping column where a stripping fluid is contacted with sour water in a column. This fluid can be of different natures, but steam is commonly used. This steam can come from a network or it can be directly produced by the sour water in a steam-heated or hot oil-heated reboiler.

In cases where the steam comes from a network (then referred to as live steam), this water is transmitted into the system and is collected together with the stripped water at the unit outlet.

There are two main water stripper categories: single-stage or two-stage strippers.
- In single-stage strippers, all the strippable dissolved gases are recovered at the column top in a water-saturated gas mixture (for example around 30 vol.% NH₃ + 30 vol.% H₂S + 30 vol.% H₂O + gaseous impurities, notably CO₂ and vaporized hydrocarbons). The water thus purified no longer contains more than some tenths to dozens of wt.ppm H₂S and/or NH₃.

Generally, stripping is carried out in such a way that the impurities content of the purified water complies with the legislation's or the operator's specifications, depending on the use of this purified water.

The specifications are more or less severe and the contents required for purified water generally range between 5 and 50 wt.ppm for NH₃ and between 0.5 and 50 wt.ppm for H₂S.

Owing to its simplicity, this type of stripper is currently the most widely used in refining despite the operating problems observed in sulfur plants due to the presence of ammonia (difficult combustion leading to deposition and sulfur incineration unit clogging).

The single strippers are also used in natural gas production and processing industry where sour water contains much lower contents of ammonia but H2S and other alkaline contaminants (such as amines).

Furthermore, serious corrosion problems are frequently reported for this type of unit, notably in the case of internal reflux (such as an air-cooled condenser on the top gas), with risks of solid deposits, clogging, corrosion, etc. Noble materials are therefore increasingly used (titanium or corrosion resistant alloys with high contents of nickel for example), which increases manufacturing costs without avoiding all the problems involved.

It has been observed that the so-called pumparound option (gas outlet cooling through cooling by a circulating liquid externally cold) is less prone to such deposition and corrosion problems.
- The two-stage stripper results from a process developed by Chevron in the 1960s (Leonard JP and al., Chem. Eng. Progress, Oct.1984,p.57-60), is known as WWT process now provided by Bechtel.

The principle of this process is to use 2 columns. The first one, referred to as highpressure column, i.e. generally 6 to 9 bars, selectively strips H₂S with steam; indeed, at such pressures, the solubility of ammonia in water is much higher than that of H₂S.

The second column operates at a lower pressure than the first column (generally 2 to 5 bars) and it strips all of the residual dissolved gases (ammonia and H₂S); a purified water with a very low NH₃ and H₂S content is thus obtained in the bottom of the second column, and it can then be recycled or treated. In general, the proportions are about 25 wt.ppm H₂S and 25 wt.ppm NH₃, and they can sometimes be as low as 0.5 wt.ppm H₂S and 5 wt.ppm NH₃.

In this type of process, the gas phase is cooled at the column top either through water injection or by cooling via partial condensation or via cooling using pumparound.

This two-stage process separates the H₂S from the NH₃, thus allowing them to be treated independently.

However, this process involves the drawback of being very sensitive to operating condition variations: the columns, in particular the first one, are readily destabilized as it diverts from its normal operating set-points and losses its performances.

Temperatures that no longer allow separation can even be reached at the column top. The operation of this column is very delicate, is difficult to set back to normal operating parameters and it requires close monitoring.

### SUMMARY OF THE INVENTION

The invention relates to a method to design a new grass root facility as well as modify the existing facility that improve the existing operation methods and operability, and allow the drawbacks thereof to be overcome. The method according to the invention is easy to implement and allows to stabilize the operation of the columns, which can then withstand operating condition variations in case of temporary malfunction while maintaining the separation performances at a high level.

The invention differs from the prior art where the operability and flexibility are significantly improved by the addition of a top gas washing stage that follows a cooling stage. The ascending stripped gas phase is cooled and then washed.

It has been observed that this separation of the cooling and washing stages allows to improve control and stability of the column by making it less sensitive to the operating condition variations, thus maintaining good separation performances.

More specifically, the invention relates to a method for treating sour water containing hydrogen sulfide and ammonia in the dissolved state so as to separate a hydrogen sulfide-laden gaseous effluent from water, the method being implemented in at least one stripping column, wherein:
- the sour water feedstock is fed into a steam stripping column fed with steam, the feedstock feed point being located above the feed point for said steam, and the feedstock is at least partly vaporized and stripped,
- the stripped ascending gas stream is cooled by a direct or an indirect exchange, and the cooled gas stream is partly condensed
- then, the uncondensed cooled stripped stream thus obtained is washed with an injected cold water
- a gaseous effluent essentially containing hydrogen sulfide and a low proportion of NH₃ is obtained,
- purified water is withdrawn in the column bottom; it preferably contains dissolved ammonia and a low proportion of H₂S.

The separated gaseous effluent generally contains 70-99 vol.% of hydrogen sulfide and it generally contains 5-5000 wt. ppm of NH₃, and more often 2-500 wt. ppm of NH₃.

The purified water generally contains 100-1000 wt. ppm of H₂S, more often 100-400 wt. ppm of H₂S .

In a preferred embodiment of the invention, the steam stripping column is provided with any type of internals for gas/liquid contacting as plates, perforated trays, random/structured packing .

The stripping column is fed with steam obtained for example from heat exchange, oven or direct steam injection.

Preferably, the column operates at a pressure of 3-20 bars, preferably 5-10 bars or 6-8 bars.

In a preferred embodiment, the stripped ascending gas stream is cooled by a direct exchange with a cold liquid , preferably water, introduced in the column.

The cold liquid allows to partly condense the water associated with the ascending vapour phase.

In an embodiment, it is introduced from an external source (utilities...) which is preferably recovered with the purified water obtained from the process.

Generally, the cold liquid is obtained through reflux of part of the stream circulating in said stripping column: withdrawal, cooling, optional condensation and reintroduction of all or part of the stream. The reflux can be of internal type, obtained via pumparound (cooling of a liquid stream withdrawn in the column), or of external type (via partial condensation of the steam leaving the column top and reintroduction of all or part of the condensed liquid). This reintroduction occurs at a level distinct from the withdrawal level.

In a preferred embodiment, the stripped ascending gas stream is cooled by a direct exchange with the reflux obtained through pumparound by withdrawing a side stream, preferably liquid, at a point of the column above the feedstock feed point and cooling (or subcooling) said side stream before being reinjected as a reflux in the column.

Withdrawal is performed above the feedstock feed point, and preferably at level located immediately above the feedstock feed point.

In another embodiment, wherein the stripped ascending gas stream is withdrawn at the column top , cooled by an indirect exchange with partial condensation. In a preferred case, the condensation liquid is fed as reflux into the column below the gas phase withdrawal point and above the sour water feedstock feed point. In another case, the condensation liquid is recycled in the sour water feedstock.

The cold liquid, which is a reflux or water from an external source, is introduced to cool the stripped gas stream. "Cold" means a temperature below that of the stripped stream and depending on the operating pressure of the column. The temperature of the cold liquid is generally at least 5°C and up to 100°C, and it preferably ranges between 20°C and 65°C.

Cooling allows the cooled gas stream to be partly condensed. The uncondensed gas phase obtained after cooling and partial condensation is washed through contact with cold liquid water injected in said phase.

In the preferred embodiment operating with pumparound, wash water is injected above the introduction level of the reflux.

In the embodiment with indirect exchange (external type), the uncondensed gas phase is washed through contact with cold liquid water injected in said phase outside the stripping column. After contact with said uncondensed cooled stripped stream, the wash water can be associated with the liquid reflux returning to the column top (external reflux loop).

The injected wash water preferably contains no, or only a very low proportion of contaminants, such as ammonia, likely to hinder separation or to degrade the purity of the gaseous effluent leaving the column. Demineralized water can be used. The same applies for the cold liquid.

The wash water is cold. "Cold" means a temperature below that of the stripped stream and depending on the operating pressure of the column. The temperature of the cold water is generally at least 5°C and up to 100°C, and it preferably ranges between 20°C and 65°C.

Generally, the stripping steam is produced by reboiling the water at the column bottom.

The invention is particularly applicable to a method comprising at least 2 stripping columns wherein:
- separation of the hydrogen sulfide occurs at the top of a first column operating with the method as claimed in any one of the previous claims and at the bottom of the column, the purified water containing the dissolved ammonia is withdrawn,
- said purified water is sent as purified water feedstock to a second column that separates the ammonia through steam stripping, the purified water is withdrawn in the bottom of said second column.

Each column is provided with one or more internals for gas/liquid contacting as plates, perforated trays, random/structured packing.

The purified water from the first column generally contains 100-1000 wt.ppm H₂S.The purified water is withdrawn from said second column generally contains less than 50 wt.ppm NH₃, preferably less than 5 wt.ppm NH₃, less than 50 wt.ppm H₂S and preferably less than 0.5 wt.ppm H₂S,

Preferably, the purified water feedstock is fed into the second column above the stripping steam feed point, and in said second column:
- the stripped ascending gas stream is cooled by a direct or an indirect exchange, and the cooled gas stream is partly condensed
- the uncondensed cooled stripped stream is then washed with an injected cold water.

Preferably, the pressure in the second column is lower than that of the first column, and it preferably ranges between 2 and 20 bars and preferably 2 and 4 bars.

Advantageously, part of the purified water from the second column is recycled as wash water to the first column and/or to the second column.

The wash water corresponding to the first or second column is constituted by said purified water or comprises said part together with water from an external source.

Washing the cooled gas phase (or the cooled gaseous effluent) with water in the first column and preferably also in the second column allows to improve the purity of the top effluent and to maintain the specification (contamination of the H₂S stream by NH₃ and conversely) despite possible fluctuations of the operating conditions. The purified water withdrawn at the bottom of the second column preferably contains less than 5 wt.ppm NH₃ and preferably less than 0.5 wt.ppm H₂S. Advantageously, the pressure in the second column is lower than that of the first column, and it preferably ranges between 2 and 5 bars, or 2 and 4 bars.

More preferably, the pressure in the first column is 6-8 bars and it is 2-4 bars in the second column. This layout allows to pass directly from the first column to the second without any additional device.

In an embodiment , the process operates with a pumparound on the second column. Thus, in this preferred embodiment of the method according to the invention,
- the cold liquid of the second column is a reflux obtained through pumparound by withdrawing a side stream, preferably liquid, at a point of the column above the feedstock feed point and cooling said side stream before being reinjected as a reflux in the column,
- then, the gaseous effluent from the second column is washed through cold liquid wash water injection and the NH₃-rich effluent is obtained,
- preferably, the cold liquid wash water is part of the purified water from the second column.

In another preferred embodiment of the method according to the invention,
- the gaseous effluent from the second column is withdrawn at the column top , cooled by an indirect exchange with partial condensation, the condensation liquid being fed as reflux into said column below the gas phase withdrawal point and above the sour water feedstock feed point,
- the uncondensed gaseous phase is washed through cold liquid wash water injection and the NH₃-rich effluent is obtained,
- preferably, the cold liquid wash water is part of the purified water from the second column.

In another embodiment of the method according to the invention,
- the stripped ascending gas stream of the second column is withdrawn at the column top, cooled by an indirect exchange with partial condensation,
- the uncondensed gaseous phase is washed through cold liquid wash water injection and the NH₃-rich effluent is obtained,
- preferably, the cold liquid wash water is part of the purified water from the second column,
- preferably, the condensation liquid and the wash water withdrawn after contacting the gaseous effluent is recycled in the sour water feedstock supplied to the first column.

The gaseous effluent leaving the process operating with a second column comprising washing is water-saturated ammonia (according to the wash temperature and pressure conditions) that can also contain a low proportion of H₂S. The ammonia purity thereof is very high, generally 90-99 vol.% ; it generally contains some hundred wt.ppm of H₂S, generally 50-500 wt.ppm H₂S.

The process that operates with the second column can comprise or not injection of the cooled stripped stream wash water. Preferably, a wash water injection is carried out, which allows to reach a higher purity of ammonia as regards H₂S and to improve the process resistance to operating variations. It can be performed in the column or outside.

The second column can comprise all the embodiments, or other elements, described for the first column (cooling loops for example). All combinations of the embodiments in the first column with the embodiments in the second column are part of the invention.

In general terms, the applicant has observed (see the examples) that the combination of stripped stream cooling and wash water injection on the uncondensed cooled stripped stream surprisingly allows to significantly improve the operating stability of the column and therefore to maintain through time the purity level of the separated hydrogen sulfide in spite of operating variations of the column.

Besides, the gaseous effluent leaving the first and/or the second column is saturated with water. This corresponds to such low contents (some mole %, for example 2-5 %) that they do not significantly affect the subsequent sulfur recovery or ammonia treatment.

The invention also relates to a facility described more in detail with the figures.

More precisely, the invention relates to a facility comprising at least one stripping column for separating a hydrogen-laden gaseous effluent from water, and comprising
- a supply line (1) for a sour water feedstock comprising dissolved hydrogen sulfide and dissolved ammonia,
- a supply line (3) for feeding stripping steam to the column,
- the sour water feedstock feed point being located above the stripping steam feed point,
- a mean for cooling by direct or indirect exchange the stripped ascending gas stream , said mean being either a supply line (9 or 9 bis) for feeding a cold liquid at a feed point located above the sour water feed point or a cooling element (8bis),
- a line (10 or 10bis) for injecting cold wash water either in the column at a point located above the cold liquid feed point or above the cooling element (in regard to the direction of the gas stream),
- a water withdrawal line (12) located in the bottom of the column, this purified water preferably containing dissolved ammonia and 100-1000 wt.ppm H₂S,
- a discharge line (11) for the gaseous effluent essentially containing hydrogen sulfide and 5-5000 wt.ppm NH₃.

### DETAILED DESCRIPTION

Depending on the origin of the sour water to be treated, the ammonia and hydrogen sulfide concentrations can be very varied, as well as the nature and concentration of other impurities (CO₂, liquid hydrocarbons, etc.). By way of example, in order to better understand the invention, the water to be treated generally contains less than 5 wt.% dissolved hydrogen sulfide and dissolved ammonia.

The invention is particularly well suited for very diluted feedstocks with low dissolved hydrogen sulfide and/or ammonia concentrations, of the order of 2000 to 10,000 wt.ppm H₂S+NH₃ for example. Indeed, with such low contents, the boiling temperatures on each theoretical plate are very close to one another, therefore the temperature profile from the column bottom reboiler to the cooling at the column top is nearly constant and the invention allows to maintain the separation performances in case of perturbation of the operating parameters that might destabilize the temperature profile.

To facilitate comprehension, the invention is described from Figures 1 to 4.
- Figure 1, according to the invention, shows the stripping column for H₂S separation with a cooling mode, via pumparound, and washing of the gas inside the column.
- Figure 2 shows another embodiment of the invention with cooling through condensation of the top steam and washing of the gas outside the column.
- Figures 3 and 4 show a method for H₂S and NH₃ separation according to the invention, with the H₂S stripping column according to the invention shown in Figures 1 and 2 respectively and a second column. Figs.3 and 4 show a first column that operates by partially recycling the purified water from the second column to the first and second column as wash water.

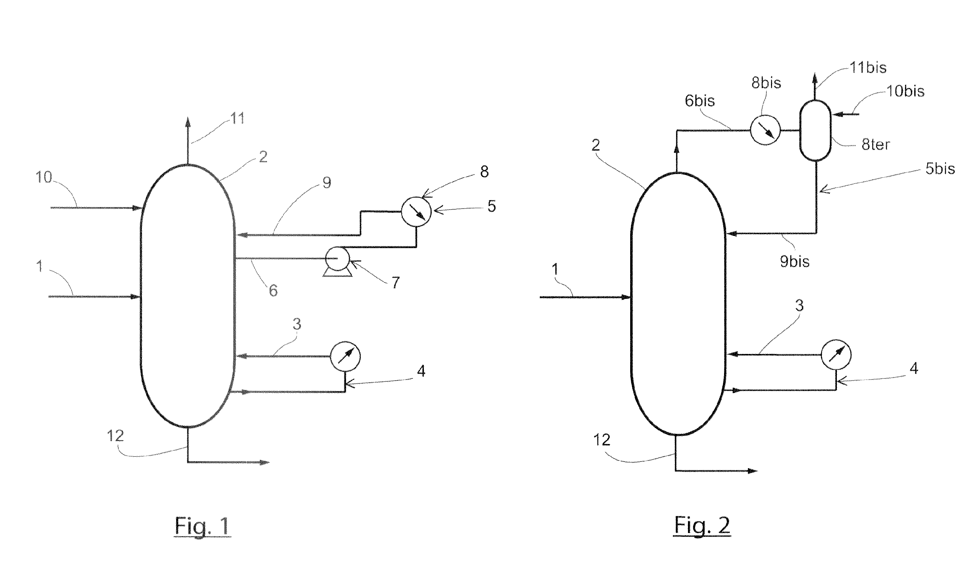

According to Figure 1, a sour water feedstock is fed (line 1) to stripping column (2) that separates H₂S. This column is provided with gas/liquid contacting devices (plates for example) dimensioned in accordance with standard practice.

Steam is fed (line 3) to the column below the feedstock feed point and it is used as stripping gas.

The steam is commonly obtained by reboiling in a reboiling loop (4) arranged in the lower part of the column. It conventionally comprises reheating the water withdrawn in the lower part of the column, and the steam obtained is reintroduced at the bottom of the column slightly above this withdrawal point (line 3).

The sour water feedstock is at least partly vaporized and stripped.

In the upper part of the column, the stream thus stripped is cooled and at least partly condensed by introducing a cold liquid above the feedstock feed point. This allows to condense the steam and to separate it from the H₂S gas phase. The cold liquid is water at a temperature of at least 5°C and up to 100°C, preferably ranging between 20°C and 65°C.

This cold liquid can be a liquid that is not produced by the process (water delivered from a utility for example) or it can be produced by the process.

Preferably, the cold liquid comes from a stripped stream cooling loop (5) provided in accordance with standard practice.

Figure 1 illustrates the case of a pumparound reflux loop. Preferably, the cold liquid comes from a pumparound reflux loop (5) that comprises a line (6) for withdrawing a side stream from the column, preferably liquid at a point above the feedstock point, a pump (7), a cooling means (8), such as a water or air condenser, and a line (9) for reinjecting the cooled liquid reflux in the column above the withdrawal point.

In this pumparound layout, withdrawal is achieved above the feedstock feed point, preferably at the level (for example of a plate) close to the feedstock feed point through line (1), preferably at the closest level (for example) plate (i.e. the contactor arranged immediately above the feedstock feed point).

The reflux withdrawal and feed points are selected according to the technology, the operating conditions and the desired performances.

Preferably, the reflux feed point is located at a level allowing effective cooling of the gas phase (theoretical stages-flow rates pair) so as to condense a maximum amount of water and to obtain an H₂S gas main vapour phase. It is determined in accordance with standard practice.

Water at a temperature above 5°C and up to 100°C, preferably 20-65°C, is injected (line 10) into the column top and contacted with said separated and cooled H₂S gas phase. The injected water, demineralized water for example, contains no contaminants likely to hinder the separation or to disturb the purity of the gaseous effluent leaving the column, such as ammonia.

The H₂S gas phase present in this zone is thus washed so that impurities such as ammonia are carried along.

A water-saturated (some mole % depending on the conditions at the column top) gaseous effluent, mainly made up of hydrogen sulfide possibly containing impurities such as dissolved gases (notably CO₂) and/or vaporized hydrocarbons, flows out of the column top. This effluent contains a low proportion of NH₃, maximum some ten to some thousand wt.ppm, according to specifications (described above) and to the uses of the effluent. An effluent containing 70-99 vol.% H₂S and 5-5000 wt.ppm NH₃, most often 5-500 wt.ppm, is generally obtained.

At the column bottom, the water containing the dissolved ammonia and little H₂S (of the order of some hundred wt.ppm maximum) is withdrawn (line 12). A water containing 100-1000 wt.ppm H₂S, often 100-400 wt.ppm, is generally obtained.

Figure 2 shows another embodiment of said column according to an external cooling and washing mode.

The elements of Figure 2 similar to those described in Figure 1 have the same reference numbers.

In Figure 2, the stripped stream is essentially cooled through indirect exchange via a cooling means 8bis in another cooling loop (5bis) referred to as external reflux loop, supplying the cold liquid. The reflux loop (5bis) is provided in accordance with standard practice.

The condensation liquid obtained through cooling with condensation of the gas phase is retrieved in a gas/liquid contactor/separator means (8ter) and withdrawn. The condensation liquid is fed as cold liquid reflux into the column below the gas phase withdrawal point and above the feedstock feed point.

More precisely, the facility comprises a line (6bis) for withdrawing the gas phase at the column top, a cooling/condensation means (8bis) (such as a water or air condenser or heat exchanger) followed by a gas/liquid contactor/separator means (8ter) as a contactor drum, a column... said means comprising a line (9bis) for feeding the condensation liquid into the column as reflux, and also comprising a line (10bis) for injecting wash water at a point located above the gas phase feed point in said means (8ter), and comprising a gaseous effluent discharge line (11bis).

Thus, the gas phase withdrawn at the column top (line 6bis) is fed into a cooling/condensation means (8bis) such as a condenser. It is then cooled and condensed. The condensation liquid is separated (in Fig.2 in contactor drum 8ter) and fed as reflux (line 9bis) into the column below said gas phase withdrawal point and above the feedstock feed point.

In the gas/liquid contactor (8ter), the gas phase separated from the condensation liquid is washed through water injection. In this embodiment, washing is carried out outside column (2). The description relative to the water injected is not repeated here as it is the same as in Fig.1. The gas phase is thus washed in order to remove possible impurities such as ammonia.

A water-saturated (some mole % depending on the washing conditions) gaseous effluent (line 11 bis), mainly made up of hydrogen sulfide, flows out of the column top. It can also contain impurities such as dissolved gases (notably CO₂ or vaporized hydrocarbons). It contains a small amount of NH₃. The purified water containing the dissolved ammonia is withdrawn at the bottom of the column (line 12). It can contain H₂S.

The proportions for the gaseous effluent and the purified water are the same as those previously given in the description and in Figure 1.

In the facility according to the invention, in general, line (3) for feeding stripping steam into the column is connected to a reboiling loop (4) arranged in the lower part of the column and below the purified water feed point.

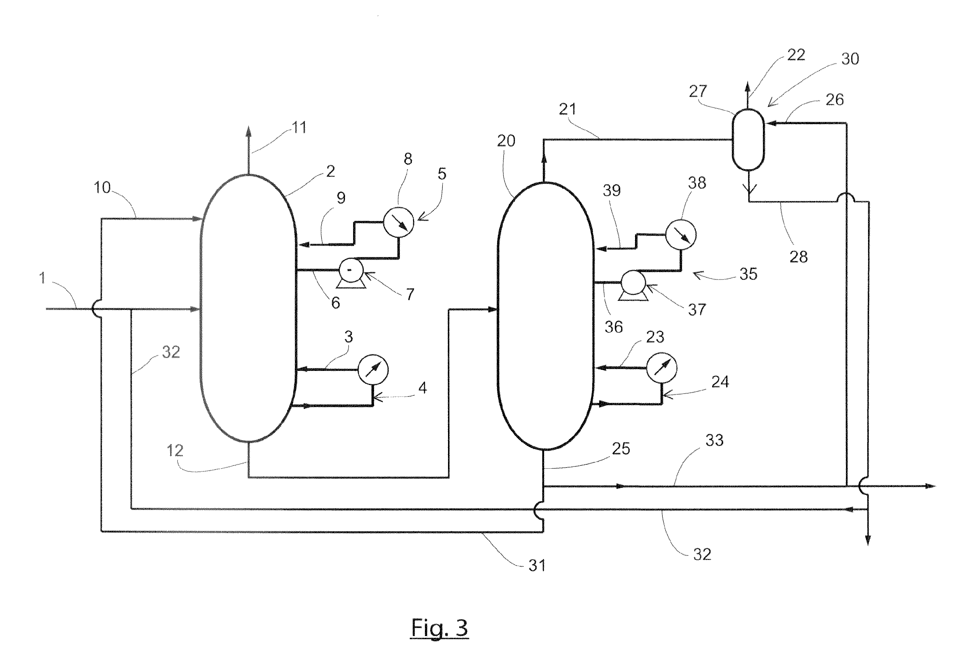

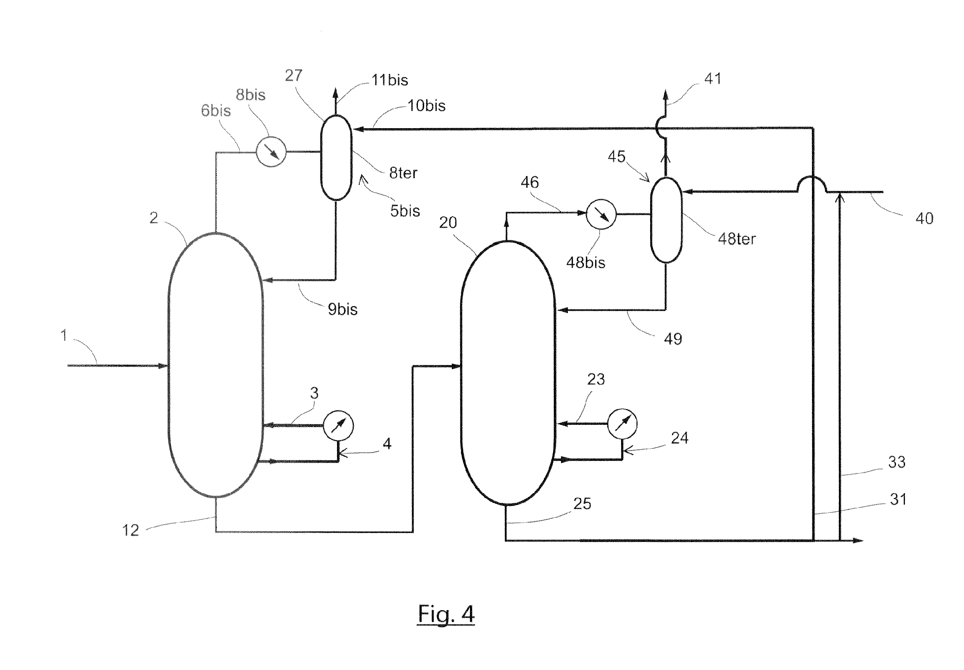

Figures 3 and 4 show an H₂S and NH₃ separation method according to the invention, with a first H₂S stripping column shown in Figures 1 and 2, and a second column.

They show a facility comprising a second column in addition to the first column, said second column comprising:
- a supply line (12) for feeding a purified water feedstock from the first column,
- a supply line (23) for feeding stripping steam to the column, the purified water feedstock feed point being located above the stripping steam feed point,
- a mean for cooling by direct or indirect exchange the stripped ascending gas stream , said direct exchange mean being a supply line (39 or 49) for feeding a cold liquid at a feed point located in the column above the sour water feed point and said indirect exchange mean being a cooling element (48bis),
- a line (26,40) for injecting cold wash water into the column at a point located above the cold liquid feed point or above the cooling element (in regard to the direction of the gas stream),
- a line (25) arranged at the bottom of the column for withdrawing the purified water,
- a line (22, 41) for discharging the NH₃-rich gaseous effluent,
- preferably, a line (31) for recycling part of the purified water (line 25) to the first column as cold wash water,
- preferably, a line (33) for recycling part of the purified water (line 25) to the second column as cold wash water.

The similar elements described in Figures 1 and 2 have the same reference numbers.

The sour water feedstock (line 1) notably contains hydrogen sulfide and ammonia in the dissolved state.

The purpose of the method is to purify the water of these two dissolved compounds by separating an H₂S-rich gaseous effluent on the one hand and a NH₃-rich gaseous effluent on the other hand.

H₂S separation occurs in the first stripping column (2) according to the invention, which corresponds to Figure 1 (with pumparound) or Figure 2 (with external reflux).

NH₃ separation occurs in the second stripping column (20) described hereafter. Figures 3 and 4 show embodiments of this column (20).

The characteristics of the cooled liquid and of the cold water are the same for the second column as previously.

According to Figure 3, the ammonia-containing purified water obtained after separation of the hydrogen sulfide is withdrawn (line 12) in the bottom of first column (2) and sent to second column (20) for ammonia separation through steam stripping. This column (20) is provided with internals for gas/liquid contacting as plates, perforated trays.... dimensioned in accordance with standard practice.

Steam is fed (line 23) to the column below the feedstock feed point and it is used as stripping gas.

It is commonly obtained through reboiling in a reboiling loop (24) arranged in the lower part of the column that conventionally comprises reheating of the water withdrawn from the lower part of the column, whose vapour phase is reintroduced into the bottom of the column slightly above this withdrawal point (line 23).

A cold liquid (a cold reflux according to the figures for example) allowing to condense the water associated with the ascending vapour phase is introduced above the purified water feed point. This type of reflux can be of internal type, via pumparound (Figure 3), or of external type, via condensation of the steam at the top (Figure 4).

Figure 3 shows the elements of the pumparound reflux loop (35) of Figure 1: a line (36) for withdrawing a side stream from the column, preferably liquid at a point above the feedstock point , a pump (37), a cooling means (38), such as a water or air condenser, and a line (39) for reinjecting the cooled liquid reflux in the column above the withdrawal point.

The stripped effluent is cooled through contact with the liquid reflux.

A gaseous effluent is obtained at the column top (line 21) and purified water is obtained in the bottom (line 25).

The gaseous effluent leaving the column (line 21) is water-saturated ammonia (according to the temperature and pressure conditions at the top) that can still contain a small amount of H₂S.

In a preferred layout, the gaseous effluent obtained after treatment in the second column is washed through water injection (line 26). It can be supplied from external sources (utilities, others units...) or, preferably, it is purified water from line (25). Washing takes place in a a gas/liquid contactor/separator means (also called washing means) (27) that can be a column, a contactor drum, etc.

The wash water is rapidly saturated with ammonia through contact with the nearly pure gaseous stream. The solution thus obtained is well suited for absorption of the residual hydrogen sulfide of the gaseous effluent.

A gaseous effluent that is water-saturated ammonia with a very high ammonia purity level, generally 90-99 vol.%, thus flows from the top of this washing means (line 22). It generally contains some hundred wt.ppm H₂S, generally 50-500 wt.ppm H₂S.

A liquid is withdrawn from the bottom of the washing means (line 28). Preferably, it is recycled (line 32) at least partly and preferably entirely to the H₂S separation column, and advantageously to the feedstock entering this column.

According to the invention, part of the purified water (line 25) is recycled (line 31) and injected into the first column for washing (line 10).

Thus, in the embodiment of Figure 3, no wash water is injected into the second column, washing is performed outside the column independently of the pumparound type cooling loop that produces cold liquid intended to cool the stripped stream. Furthermore, in fig.3 there is no cooling means on line (21) but it is not mandatory, a cooling means can be used as in fig.2 for example.

This figure illustrates a layout of the process according to the invention wherein:
- the cold liquid of the second column is a reflux obtained through pumparound by withdrawing a side stream from the column, preferably liquid at a point above the feedstock point, a pump (37), a cooling means (38), such as a water or air condenser, and a line (39) for reinjecting the cooled liquid reflux in the column above the withdrawal point,
- the gaseous effluent from the second column is washed through cold liquid wash water injection, the NH₃-rich effluent is separated,
- preferably, said cold liquid wash water is purified water from the second column, and
- preferably, the wash water, after contacting the NH₃-rich effluent, is recycled to the sour water feedstock of the first column.

It also illustrates a preferred layout of the facility comprising:
- a purification loop (30) for the gaseous effluent from the second column, said loop comprising a gas/liquid contactor (27) provided with a line (21) delivering the gaseous effluent, a line (26) for injecting cold wash water above the gaseous effluent feed point, a line (28) for withdrawing the wash water after contacting the gaseous effluent, and a line (22) for discharge of the ammonia-rich gaseous effluent, and
- in the second column, the cold liquid comes from a pumparound reflux loop (35) that comprises a line (36) for withdrawing part of the liquid present at a contactor, a pump (37), a cooling means (38) such as an air or water condenser, and a line (39) for feeding the cooled liquid reflux to the column above the withdrawal point,
- preferably, a line (31) for recycling part of the purified water (line 25) to the first column as cold wash water (line 10),
- preferably, a line (33) for recycling part of the purified water (line 25) to the second column as cold wash water (line 26), and
- preferably, a recycle line (32) for transferring the wash water withdrawn (line 28) after contacting the gaseous effluent to sour water feedstock line (1).

Figure 4 shows a second column operating with wash water injection into the external cooling loop.

Figure 4 shows the elements of the external reflux loop (45) of Figure 2: a line (46) for withdrawing the gas phase at the column top, a cooling/condensation means (48bis) (such as a water or air condenser) followed by a gas/liquid contactor/separator means (48ter), said means comprising a line (49) for recovery of the condensation liquid and introduction (via a pumping system not shown in the figure) into column (20), also comprising a line (40) for injecting wash water at a point located above the gas phase feed point at said means (48ter), and also comprising a gaseous effluent discharge line (41). The NH₃-rich gaseous effluent is thus discharged through line (41) at the top of contactor drum (48ter) and the purified water is withdrawn at the bottom of the column (line 25).

The gaseous effluent leaving the column (line 41) is water-saturated ammonia (according to the washing temperature and pressure conditions) that can still contain a small amount of H₂S. The ammonia purity thereof is very high, generally 90-99 vol.% ; it generally contains some hundred wt.ppm of H₂S, generally 50-500 wt.ppm H₂S.

According to the invention, preferably, purified water withdrawn from the bottom of the second column (line 25) is recycled (line 10bis) partly for washing the gaseous effluent from the first column.

According to the invention, preferably, purified water withdrawn from the bottom of the second column (line 25) is recycled partly as wash water (line 40) for the gaseous effluent from the second column.

In the facility according to the invention, in general, line (3) for feeding stripping steam to the column is connected to a reboiling loop (4) arranged in the lower part of the first column below the sour water feed point, or in the lower part of the second column below the purified water feed point.

Figure 4 illustrates a facility wherein said second column comprises:
- a reflux loop (45) that provides the cold liquid, comprising a line (46) for withdrawing the gas phase at the column top, a cooling/condensation means (48bis) followed by a gas/liquid contactor/separator means (48ter), said means comprising a line (49) for feeding the condensation liquid into the column, also comprising a line (40) for injecting wash water at a point located above the gas phase feed point in said means (48ter), and also comprising a gaseous effluent discharge line (41),
- preferably, a line (33) for recycling part of the purified water (line 25) to the second column as cold wash water (line 40), and
- preferably, a line (31) for recycling part of the purified water (line 25) to the first column as cold wash water (line 10bis).

This layout of the second column shown in Figure 4 is usable when allowed by the specification relative to the ammonia purity in relation to H₂S (SO₂ emissions at the incinerator outlet). The layout shown in Figure 3 (loop comprising means 27 associated to purge 28) is preferably used in the opposite case.

It goes without saying that said first and second columns can comprise one or more columns.

Injection of the wash water into the second column is not illustrated in Figures 3 and 4, as it is for the first column (notably in Figure 3), this embodiment being easy to understand without a dedicated figure. This layout is of course included in the invention. Neither is the embodiment wherein the two columns comprise a pumparound reflux loop and injection of cold wash water into the columns illustrated by a figure. This layout is of course included in the invention.

It is clear that all the combinations of embodiments for the first column and embodiments (or layouts) for the second column are included in the invention.

The advantages of the invention are shown in the examples hereafter.

### Examples

A facility with 2 columns is considered, with a single water injection at the top of each column, which simultaneously achieves cooling and washing of the gaseous effluent.

The feedstock is very diluted and it contains approximately 0.5 wt.% H₂S and 0.4 wt.% NH₃. The flow of water to be treated is of the order of 120 m³/h and it is fed into the first column at a temperature of approximately 140°C.

The first column operates at between 6 and 9 bars, and it selectively strips H₂S with steam. The reboiling energy (reboiling steam consumed) is fixed. Cold water is injected at the top of the column. A steam stream whose composition is close to 98 vol.% H₂S and 2 vol.% H₂O is obtained at the top of this first column.

The second column operates at a different pressure than the first column (2 to 5 bars) and it strips all of the residual dissolved gases (ammonia and H₂S). The stripping rate is generally higher than that of the first column. A purified water containing less than 25 wt.ppm NH₃ and H₂S each, which can be recycled or treated, is thus obtained in the bottom of the second column.

A column intended for water washing of the gases from the second column is used to remove the residual hydrogen sulfide from the gaseous ammonia, thus allowing to obtain a gaseous stream containing approximately 95 vol.% NH₃ and approximately 5 vol.% water, and less than 250 wt.ppm H₂S.

The ammonia-rich gaseous stream can thus be sent to an incinerator without any particular treatment, the SO₂ emissions being considerably limited as a result of the low associated H₂S content.

Two-stage simulations were carried out by varying the reboiling power and the flow rate of the injected cold water.

### Test 1 - Comparative

In this example, under normal operating conditions, the reboiling power of the first column is 6.5 MW and the flow rate of the cold condensation water injected at the top of the first column is 18383 kg/h.

The NH₃ content of the H₂S gas stream obtained at the top of the first unit is 136 ppm and the H₂S content of the NH₃ gas stream obtained at the top of the second unit is 1 ppm.

The table hereafter compares the NH₃ and H₂S contents as contaminants of each effluent, in response to a more or less 1 % variation of the reboiling power in the first column, and in response to a more or less 1 % variation of the flow rate of the cooling water injected into this column.

The data relative to the first column (reboiler power, injected cooling water flow rate, NH₃ content of the outflowing H₂S) and to the second column (wash water flow rate and H₂S content of the outflowing NH₃) are as follows:

| | Reboiler power variation | | | Injected cold water flow rate variation | | |
|---|---|---|---|---|---|---|
| % | -1% | normal | +1% | -1% | normal | +1% |
| 1st reboiler power (MW) | 6.44 | 6.50 | 6.57 | 6.5 | | |
| Cold water flow rate (kg/h): top gas cooling in column 1 | 18383 | | | 18201 | 18383 | 18567 |
| Cold water flow rate (kg/h) : top gas washing in column 2 | 1943 | | | 1943 | | |
| NH3 in H2S gas (mol.ppm) : treated gas from column 1 | 1 | 136 | 21000 | 4111 | 136 | 2 |
| H2S in NH3 gas (mol.ppm) : treated gas from column 2 | 31000 | 1 | 1 | 1 | 1 | 4400 |

It can be observed that a low fluctuation in the reboiling power or the flow rate of the cooling water injected at the top of the first column tends to destabilize the whole system and leads to the loss of separation efficiency between H₂S and NH₃.

It can also be noted that a steam flow rate control controlled by a temperature setpoint, in order to provide the reboiling power, does not readily allow to obtain an accuracy to about 1 % and that such fluctuations are probably observed on a site during operation.

### Test 2 - According to the invention

Coupling to the first column a pumparound cooling system with cold wash water injection has been considered.

In this new configuration, the same sour water feedstock is treated with a reboiling power of 5.85 MW, a cold cooling water flow rate of 20,000 kg/h and a wash water flow rate of 5000 kg/h.

As above, reboiler power variations and variations in the flow rate of the cold water injected into the first column have been considered.

| | 1st reboiler power variations | | | | | | | | |
|---|---|---|---|---|---|---|---|---|---|
| 1st reboiler power variation (%) | -17% | -15% | -10% | -5% | normal | +5% | +10% | +15% | +21% |
| 1st reboiler power (MW) | 4.87 | 5.00 | 5.26 | 5.56 | 5.85 | 6.14 | 6.43 | 6.72 | 7.10 |
| Cold water flow rate (kg/h) : top gas washing in column 1 | 5000 | | | | | | | | |
| Pumparound reflux flow rate (kg/h) : top gas cooling in column 1 | 20000 | | | | | | | | |
| Cold water flow rate (kg/h) : top gas washing in column 2 | 3000 | | | | | | | | |
| NH3 in H2S gas (mol.ppm) : treated gas from column 1 | 0 | 0 | 0 | 0 | 0 | 0 | 0 | 0.1 | 582 |
| H2S in NH3 gas (mol.ppm) : treated gas from column 2 | 55000 | 6663 | 0 | 0 | 0 | 0 | 0 | 0 | 0 |

| | Flow rate variations of the injected cold gas wash water at the top of column 1 | | | | | | |
|---|---|---|---|---|---|---|---|
| Flow rate variation of the cold gas wash water at the top of column 1 (%) | -90% | -80% | -40% | normal | +20% | +40% | +100% |
| 1st reboiler power (MW) | 5.85 | | | | | | |
| Cold water flow rate (kg/h) : top gas washing in column 1 | 500 | 1000 | 3000 | 5000 | 6000 | 7000 | 10000 |
| Pumparound reflux flow rate (kg/h) : top gas cooling in column 1 | 20000 | | | | | | |
| Cold water flow rate (kg/h) : top gas washing in column 2 | 3000 | | | | | | |
| NH3 in H2S gas (mol.ppm) : treated gas from column 1 | 82 | 2 | 0 | 0 | 0 | 0 | 0 |
| H2S in NH3 gas (mol.ppm) : treated gas from column 2 | 0 | 0 | 0 | 0 | 0 | 0 | 0 |

These results clearly show that the invention allows to improve the "normal" operation in terms of selectivity and also to operate the process in a robust manner in spite of significant operating condition differences in relation to the previous configuration. The tolerance of the system towards variations has been substantially improved.

## Claims

1. A method for treating sour water containing hydrogen sulfide and ammonia in the dissolved state so as to separate a hydrogen sulfide-laden gaseous effluent from water, the method being implemented in at least one stripping column, wherein:
- the sour water feedstock is fed into a steam stripping column fed with steam , the feedstock feed point being located above the feed point for said steam, and the feedstock is at least partly vaporized and stripped,
- the stripped ascending gas stream is cooled by a direct or an indirect exchange, and the cooled gas stream is partly condensed
- then, the uncondensed cooled stripped stream is washed with an injected cold water
- a gaseous effluent essentially containing hydrogen sulfide and a low proportion of NH₃ is obtained,
- purified water is withdrawn in the column bottom; it preferably contains dissolved ammonia and a low proportion of H₂S.

2. A method as claimed in claim 1, wherein the gaseous effluent essentially containing hydrogen sulfide and 5-5000 wt.ppm NH₃ , and the purified water contains dissolved ammonia and 100-1000 wt.ppm H₂S.

3. A method as claimed in any one of the previous claims, wherein said column operates at a pressure of 3-20 bars, preferably 6-8 bars.

4. A method as claimed in any one of the previous claims, wherein the stripped ascending gas stream is cooled by a direct exchange with the reflux obtained through pumparound by withdrawing a side stream, preferably liquid, at a point of the column above the feedstock feed point and cooling said side stream before being reinjected as a reflux in the column.

5. A method as claimed in claim 4, wherein withdrawal is performed above the feedstock feed point, and preferably at level located immediately above the feedstock feed point.

6. A method as claimed in any one of claims 1 to 3, wherein the stripped ascending gas stream is withdrawn at the column top , cooled by an indirect exchange with partial condensation, the condensation liquid being fed as reflux into the column below the gas phase withdrawal point and above the sour water feedstock feed point.

7. A method as claimed in any one of claims 1 to 3, wherein the stripped ascending gas stream is withdrawn at the column top , cooled by an indirect exchange with partial condensation, the condensation liquid being recycled in the sour water feedstock.

8. A method as claimed in claim 6 or 7, wherein the uncondensed gas phase obtained after cooling with partial condensation is washed through contact with cold liquid water injected in said phase.

9. A method as claimed in any one of the previous claims, wherein said wash water and/or said cold liquid contains no contaminants likely to hinder separation or to degrade the purity of the gaseous effluent leaving the column, such as ammonia.

10. A method as claimed in any one of the previous claims, wherein the cold liquid and/or the wash water is water at a temperature of at least 5°C and up to 100°C, preferably ranging between 20°C and 65°C.

11. A method comprising at least 2 stripping columns wherein:
- separation of the hydrogen sulfide occurs at the top of a first column operating with the method as claimed in any one of the previous claims and at the bottom of the column, the purified water containing the dissolved ammonia is withdrawn,
- said purified water is sent as purified water feedstock to a second column that separates the ammonia through steam stripping, the purified water is withdrawn in the bottom of said second column.

12. A method as claimed in claim 11 wherein the purified water contains less than 50 wt.ppm NH₃, preferably less than 5 wt.ppm NH₃, less than 50 wt.ppm H₂S and preferably less than 0.5 wt.ppm H₂S.

13. A method as claimed in claim 11 or 12 , wherein the purified water feedstock is fed into the second column above the stripping steam feed point, and in said second column:
- the stripped ascending gas stream is cooled by a direct or an indirect exchange, and the cooled gas stream is partly condensed
- the uncondensed cooled stripped stream is then washed with an injected cold water.

14. A method as claimed in any one of claims 11 to 13 wherein the pressure in the second column is lower than that of the first column, and it preferably ranges between 2 and 20 bars and preferably 2 and 4 bars.

15. A method as claimed in any one of claims 11 to 14 , wherein part of the purified water from the second column is recycled as wash water to the first column and/or to the second column.

16. A method as claimed in any one of claims 11 to 15, wherein:
- the cold liquid of the second column is a reflux obtained through pumparound by withdrawing a side stream, preferably liquid, at a point of the column above the feedstock feed point and cooling said side stream before being reinjected as a reflux in the column,
- then, the gaseous effluent from the second column is washed through cold liquid wash water injection and the NH₃-rich effluent is obtained,
- preferably, the cold liquid wash water is part of the purified water from the second column .

17. A method as claimed in any one of claims 11 to 15, wherein
- the gaseous effluent from the second column is withdrawn at the column top , cooled by an indirect exchange with partial condensation, the condensation liquid being fed as reflux into said column below the gas phase withdrawal point and above the sour water feedstock feed point,
- the uncondensed gaseous phase is washed through cold liquid wash water injection and the NH₃-rich effluent is obtained,
- preferably, the cold liquid wash water is part of the purified water from the second column.

18. A method as claimed in any one of claims 11 to 15, wherein
- the stripped ascending gas stream of the second column is withdrawn at the column top , cooled by an indirect exchange with partial condensation,
- the uncondensed gaseous phase is washed through cold liquid wash water injection and the NH₃-rich effluent is obtained,
- preferably, the cold liquid wash water is part of the purified water from the second column,
- preferably, the condensation liquid and the wash water withdrawn after contacting the gaseous effluent is recycled in the sour water feedstock supplied to the first column.

19. A facility comprising at least one stripping column for separating a hydrogen-laden gaseous effluent from water, and comprising :
- a supply line (1) for a sour water feedstock comprising dissolved hydrogen sulfide and dissolved ammonia,
- a supply line (3) for feeding stripping steam to the column,
- the sour water feedstock feed point being located above the stripping steam feed point,
- a mean for cooling by direct or indirect exchange the stripped ascending gas stream , said direct exchange mean being a supply line (9 or 9 bis) for feeding a cold liquid at a feed point located in the column above the sour water feed point, said indirect exchange mean being a cooling element (8bis),
- a line (10 or 10bis) for injecting cold wash water into the column at a point located above the cold liquid feed point or above the cooling element (in regard to the direction of the gas stream),
- a water withdrawal line (12) located in the bottom of the column, this purified water preferably containing dissolved ammonia and 100-1000 wt.ppm H₂S,
- a discharge line (11) for the gaseous effluent essentially containing hydrogen sulfide and 5-5000 wt.ppm NH₃.

20. A facility as claimed in claim 19, wherein the cold liquid comes from a pumparound reflux loop (5) that comprises a line (6) for withdrawing a side stream from the column, preferably liquid at a point above the feedstock point, a pump (7), a cooling means (8), such as a water or air condenser, and a line (9) for reinjecting the cooled liquid reflux in the column above the withdrawal point, and preferably the steam stripping column is provided with plates , and the withdrawal line (6) is arranged above the feedstock feed point, at a level (plate close to the feedstock feed point through line (1), and preferably at the closest level (plate) .

21. A facility as claimed in claim 19, comprising wherein a reflux loop (5bis) comprising a line (6bis) for withdrawing the gas phase at the column top, a cooling/condensation means (8bis), followed by a gas/liquid contactor/separator means (8ter), said means comprising a line (9bis) for feeding the condensation liquid into the column as reflux, also comprising a line (10bis) for injecting wash water at a point located above the gas phase feed point in said means (8ter), and also comprising a gaseous effluent discharge line (11bis).

22. A facility as claimed in any one of claims 19 to 21 comprising a second column in addition to the first column, said second column comprising:
- a supply line (12) for feeding a purified water feedstock from the first column,
- a supply line (23) for feeding stripping steam to the column, the purified water feedstock feed point being located above the stripping steam feed point,
- a mean for cooling by direct or indirect exchange the stripped ascending gas stream , said direct exchange mean being a supply line (39 or 49) for feeding a cold liquid at a feed point located in the column above the sour water feed point and said indirect exchange mean being a cooling element (48bis),
- a line (26,40) for injecting cold wash water into the column at a point located above the cold liquid feed point or above the cooling element (in regard to the direction of the gas stream),
- a line (25) arranged at the bottom of the column for withdrawing the purified water,
- a line (22, 41) for discharging the NH₃-rich gaseous effluent,
- preferably, a line (31) for recycling part of the purified water (line 25) to the first column as cold wash water,
- preferably, a line (33) for recycling part of the purified water (line 25) to the second column as cold wash water,
- and preferably said facility comprising
1)either
- a purification loop (30) for the gaseous effluent from the second column, said loop comprising a gas/liquid contactor (27) provided with a line (21) delivering the gaseous effluent, a line (26) for injecting cold wash water above the gaseous effluent feed point, a line (28) for withdrawing the wash water after contacting the gaseous effluent, and a line (22) for discharge of the ammonia-rich gaseous effluent, and
- in the second column, the cold liquid comes from a pumparound reflux loop (35) that comprises a line (36) for withdrawing part of the liquid present at a contactor, a pump (37), a cooling means (38) such as an air or water condenser, and a line (39) for feeding the cooled liquid reflux to the column above the withdrawal point,
- preferably, a line (31) for recycling part of the purified water (line 25) to the first column as cold wash water (line 10),
- preferably, a line (33) for recycling part of the purified water (line 25) to the second column as cold wash water (line 26), and
- preferably, a recycle line (32) for transferring the wash water withdrawn (line 28) after contacting the gaseous effluent to sour water feedstock line (1),
2) or in said facility said second column comprises:
- partial condensation of the gas phase withdrawn at the column top is obtained from a reflux loop (45) that provides the cold liquid, comprising a line (46) for withdrawing the gas phase at the column top, and heat exchange is performed with a cooling/condensation means (48bis) followed by a gas/liquid contactor/separator means (48ter), said means comprising a line (49) for feeding the condensation liquid into the column, also comprising a line (40) for injecting wash water at a point located above the gas phase feed point in said means (48ter), and also comprising a gaseous effluent discharge line (41),
- preferably, a line (33) for recycling part of the purified water (line 25) to the second column as cold wash water (line 40), and
- preferably, a line (31) for recycling part of the purified water (line 25) to the first column as cold wash water (line 10bis).
